# EUROPEAN PATENT APPLICATION

(11) **EP 2 051 445 A1**
(43) Date of publication of application: **22.04.2009**
(21) Application number: 07254132.9
(22) Date of filing: 18.10.2007
(51) Int. Cl.: H04L 12/28

(54) **Wireless access system**

(71) Applicant: British Telecommunications public limited company, 81 Newgate Street London EC1A 7AJ (GB)
(72) Inventor: The designation of the inventor has not yet been filed
(74) Representative: Lidbetter, Timothy Guy Edwin

(57) **Abstract**

Cordless access over an extended area is provided by a network of co-operating wireless access points 10, 20, 30 etc all operating on a common channel, such that continuous communication with a mobile handset 9 is possible within the combined coverage of the set of access points. The access points are all recognised by the handset 9 as being part of the same connection.

The access points are in communication with each other, either by wireless connections 11, 51 or by wired connections 21, 41, so that they can communicate between each other, a home base site controller 60, and a connection 31 to the public network. Under the control of the HBSC 60, all the access points 10, 20, broadcast a common service set identifier SSID and operate on the channel selected by the HBSC 60, and consequently a communications session can continue seamlessly, regardless of which access point is currently in use. The HBSC 60, on receiving a data transmission addressed to a specified handset 9, forwards it to any access points 20, 40 directly connected to it.

A method is disclosed for setting up the access points 10, 20, 30 to form the wireless network.

## Description

This invention relates to wireless access systems of the kind used to provide wireless communication between a portable handset and a base station connected to a fixed (wired) telecommunications connection. Such connections are used to allow connection between a network and voice or data terminals at locations distant from the nearest fixed network termination location, and to allow the terminal to move about whilst maintaining the connection. Existing connections use a variety of standards, such as the ETSI "DECT" standard (Digital Enhanced Cordless Telecommunications) for digital voice connections, and "wi-fi" (IEEE standard 802.11 and later) for data.

The wireless access point is arranged to establish association with one or more terminals, either on a temporary or permanent basis. For the duration of that association, each terminal will communicate solely through its associated access point. If the terminal is subsequently to be used in association with a different access point, for example because it has been taken from one location to another, a new association must be established, in most cases requiring a new call set-up or log-in procedure (depending on the nature of the connection). To allow a handset to communicate through different base stations at different times during the progress of a single communications session, cellular telephone systems are designed to establish an association between the handset and the second base station before breaking off the association with the first. However, in such arrangements, each connection has to be separately established by co-operation between the handset, the respective base stations, and a network control system. In particular, the handset has to identify available base stations and, when a handover is to be initiated, has to switch channels, time delay, etc, at the point of handover.

Systems also exist which allow a handset to rove into range of an access point, and to both hand out and hand in to and from an overlying cellular system when wifi signal coverage is not available. This is carried out under the control of a home base station controller (HBSC) associated with the access point. This allows cordless or wifi access when it is available and handing off to an overlying cellular system if the handset moves out of range of the dedicated cordless base station. Such arrangements allow the user to have the advantages of lower tariffs, higher bandwidth, or other facilities of the cordless (or wifi) system, whilst not being limited to the range of that system.

However, many new service opportunities require wider area wireless coverage within a home, building or campus than can be provided by a single wireless access point/router. It is therefore desirable that cordless coverage would be made available from a small set of wireless routers arranged to co-operate such that a conventional cordless handset can communicate through any of them, as it is moved through the area of coverage. Unlike cellular systems, cordless handsets are not designed to arrange handovers between stations operating on different channels during a single session, conventional cellular techniques will not work in this context. The use of a wireless extender, such as a "leaky feeder" has been suggested, but this proven to be not totally acceptable in terms of its performance.

According to the invention there is provided a plurality of wireless access points which co-operate to transmit and receive transmissions on a common channel, such that continuous communication with a mobile handset can is possible over the common channel within the combined coverage of the set of access points. Thus a number of access points can be networked together, such that to the handset they all behave as if they are a single access point. This allows a user to rove within the combined coverage area of all the access points without losing connectivity via wifi/broadband.

According to another aspect there is provided a wireless access point having means to co-operate with similar access points to transmit and receive transmissions on a common channel, such that continuous communication with a mobile handset or test device is possible within the combined coverage of the set of access points.

According to another aspect there is provided a method of communicating between a plurality of wireless access points and one or more handsets in which the handset communicates with a network through one of the access points, wherein the access points all transmit and receive on a common channel, wherein the access points determine between themselves which is to transmit data to the handset, and to forward to the network data received from the handset.

All the access points are set to transmit and receive on the same channel, preferably using the same service set identifier, so the handset remains operating on the same channel throughout any changes between connection to one access point and connection to another. In the preferred arrangement, at any given time only one access point responds to and forwards data received from a given handset. Thus handover between access points is transparent to the handset, and the handset may be conventional, being able to monitor all access points available for use.

The co-operation between access points may be by any suitable means: in the preferred embodiment they are connected to an HBSC by a secondary radio virtual circuit, but they may communicate using other means such as the existing wiring in the building. In the preferred embodiment, the network interconnecting the access points can be set up automatically as the user deploys them.

When roving outside the coverage of the combined access point range the handset may hand over communication to an overlying cellular system as it would with a single access point, and when again within coverage of the combined access point coverage, it hands back to wifi connectivity.

To ensure that control messages relating to handover etc are transmitted in time to handle requests for handover from handsets, the preferred embodiment provides for each access point to prioritise control messages to be sent between the access points, such that requests for rove in and out and hand in and handout can be detected and acted on.

The external network is informed of, but does not react to, roving between access points: it only responds to the particular times when a handset first appears on the network, (i.e. is turned on or first comes into range of one of the access points), or when it disappears (i.e. handset is turned off or moves out of range of any of the access points).

Handsets are designed to perform a handshake operation with the local access point. In the preferred embodiment, each access point within range of the handset performs this operation, such that the received signal strength of the signal and the quality of the signal in terms of packet loss is monitored, and at a predetermined combination of these measurements is used to determine handover. These handshakes occur periodically, and are used to determine which access point should be used to communicate with the handset.

If the wireless link degrades to a point where delay is detected in control signal reception by the access point, this is seen as a trigger for the particular access point to signal to the HBSC that handover to GSM is needed. The HBSC signals to the handset that it should monitor the GSM signal and, if it can identify a GSM signal better than the wifi link, a handover to GSM is attempted.

In the preferred arrangement, handover to the cellular system is only sought if the quality of the wireless link falls below a predetermined minimum. Provided that the wireless link is above that minimum, it is preferred to use it, as it may afford facilities not available over the cellular link, and/or cost more in usage charges.

In the preferred embodiment, each access point has the ability to handshake with one or more adjacent access points, such that the optimum positioning of each access point can be achieved. The network of access points can then be set up automatically as the user deploys them.

The access point network is therefore able to interact with the client devices and detect rove in and rove out need, including any early need for hand in / handout to GSM. This information is passed to the network controller and also all access points in the local network. The detected control information is passed over the radio network prioritised for this type of information, allowing priority transfer of control information to the HBSC and also to other access points in the local network. In the case of roving between access points this allows for the make-before-break set up of connectivity between the client device and the broadband gateway, such that a seamless transfer of control and connectivity is passed from one access point to another in the local network. In the case of handover, the fast transfer of control information allows for the maintenance of acceptable handout/hand in performance.

An Embodiment of the invention will now be described, by way of example, with reference to the drawings, in which
Figure 1 is a schematic diagram illustrating a prior art installation comprising a single wireless access point
Figure 2 is a schematic diagram illustrating an installation of several access points according to the invention
Figure 3 is a schematic diagram illustrating the functional elements of an individual access point according to the invention
Figure 4 is a flow diagram illustrating the process of setting up an access point to form part of a co-operating installation of such access points
Figure 5 is a diagram illustrating the handling of a communications session by the co-operation of the access points, including the handover process by which control of a handset is passed from one such access point to another

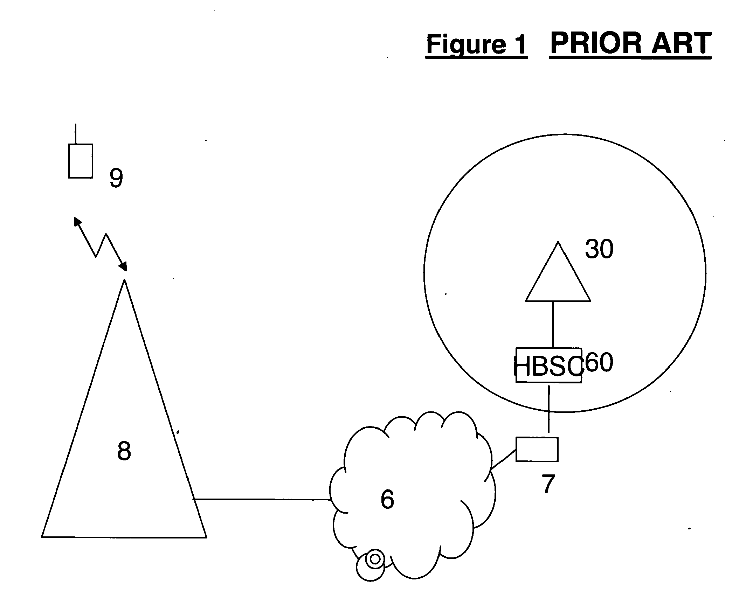

Figure 1 depicts a wifi access point 30 which is connected to the public switched telephone network (PSTN) 6 through a home base site controller (HBSC) 60 and a standard network termination point 7. The access point 30 has a wireless range depicted by the circle surrounding it, within which a handset 9 can communicate with it. The handset 9 is also capable of communication with the network 6 through a public cellular telephone system, represented in Figure 1 by a base station 8. In practice, the handset 9 is configured so that it connects to the cellular system 8 only if, as shown in Figure 1, it is unable to establish contact with the access point 30. Control of handover between the cellular network 8 and a wireless access point is known in the art.

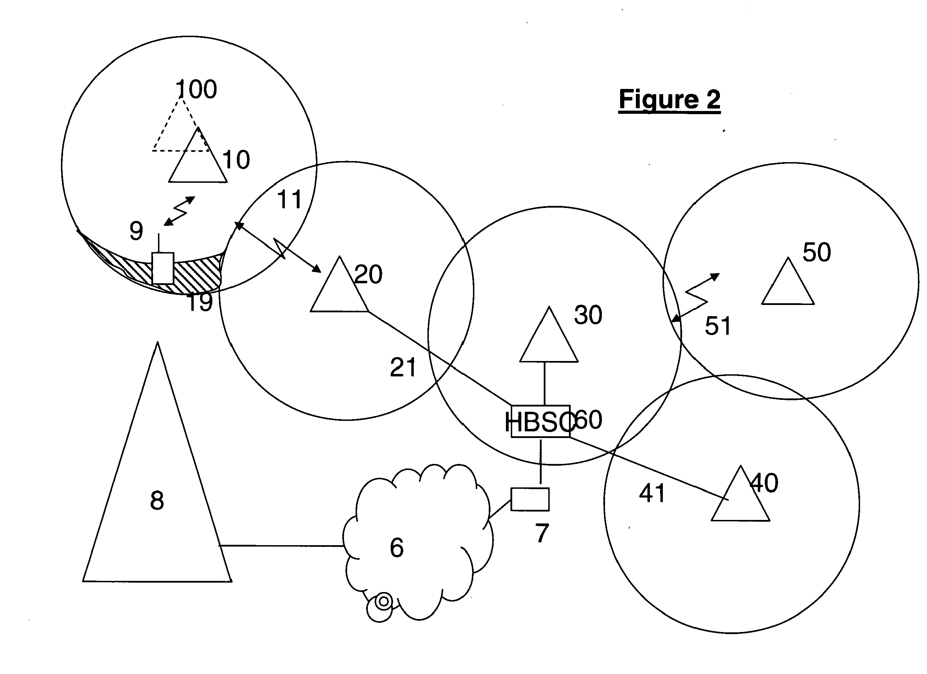

The invention, as shown in Figure 2, allows the extension of the area of coverage of the wireless access point by the provision of one or more repeaters 10, 20, 40, 50. For these repeaters to co-operate with the handset, they must be recognised both by the home base site controller 60 and by the handset 9 as part of the same connection.

Figure 2 depicts an installation according to the invention having five access points 10, 20, 30, 40, 50, each of which has a wireless range depicted by the circle surrounding it, within which a handset 9 can communicate with it (as shown for the access point 10). It will be seen that the wireless ranges overlap, to provide a continuous region of coverage. The inclusion of five access points in Figure 1 is in order to illustrate a number of possible variations - for a normal domestic installation, it is unlikely that more than three would be required.

The positioning of each access point 10, 20, 30, 40, 50 is chosen to optimise the region of coverage provided by the access points when considered as a group, whilst ensuring adequate communication between them. As shown, the access points have a radius of coverage for handsets slightly more than half the spacing between the access points. It must be recognised that this is a schematic representation, and coverage does not cease abruptly on the boundary of a geometric circle centred on each access point.

The access points, unlike the handsets, are likely to have access to an external power supply, and so have greater receive and transmit power, allowing them to exchange data between each other over longer distances than is possible with the handsets.

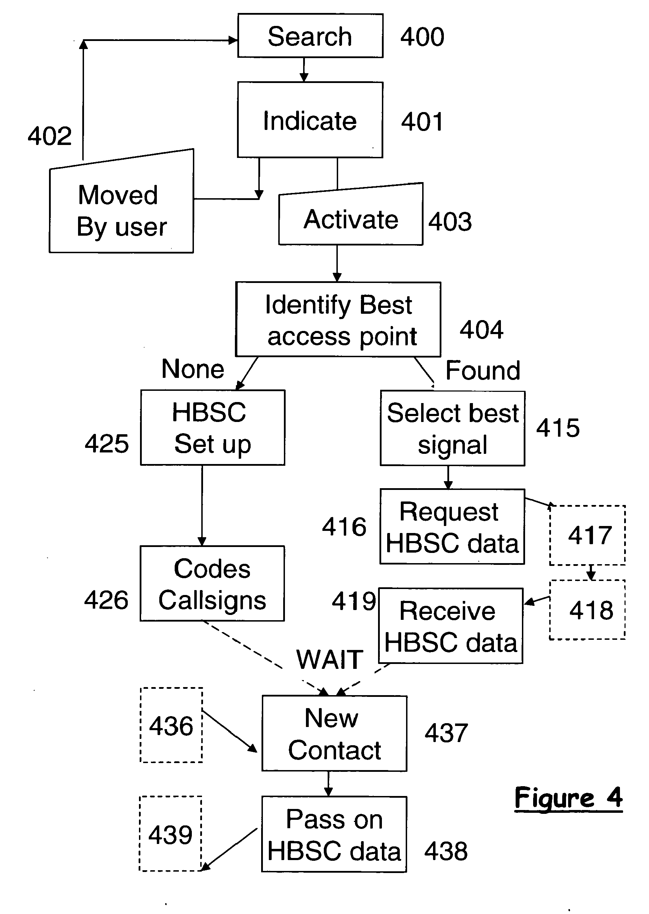

An alternative location 100 for the access point 10 is shown in Figure 2, together with a shaded area 19 indicating the difference in coverage area of access points in the two locations 10, 100. This will be discussed further with reference to Figure 4.

The access points are in communication with each other, either by wireless connections 11, 51 or by wired connections 21, 41. The wired connections may make use of existing wiring, for instance telephone extension wiring, or by carrying signals over other wiring present in the building, such as that used for power supply.

The wireless access points are all controlled by a home base station controller (HBSC) 60. Conveniently, the HBSC functions 60 may be incorporated in one of the access points 30.

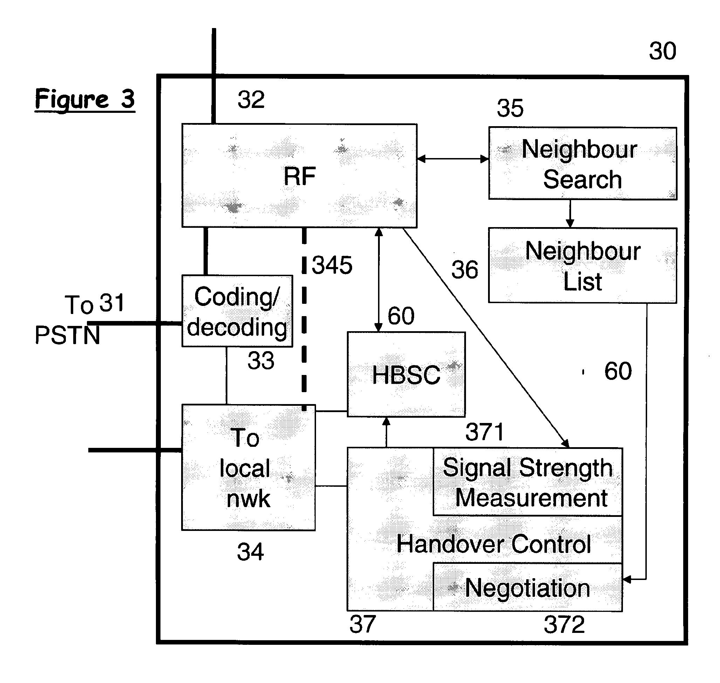

Figure 3 is a diagram of the various functional elements of an individual access point 30. This is a schematic diagram illustrating the functional relationships only - it will be appreciated that the device can be embodied as one or more integrated circuits, and that elements such as a power supply have been omitted for simplicity. As in a conventional access point, the access point 30 comprises a network connection 31 and an RF transmitter/receiver 32, connected through an interface 33 which converts signals between the format used over the PSTN 31 (typically analogue for voice signals, or broadband for data) and the format used over the wireless interface 32 (DECT, or wifi). The wireless interface 32 communicates with the handset 9, with handovers to and from the cellular system being handled by a home base system controller 60.

It is convenient to provide a network connection 31 and associated interface 33 in each access point device as this allows any of the devices to operate as the interface with the PSTN, even though, as will be seen, only one device in each network will use this capability. Similarly, the provision of HBSC capability 60 in each access point device allows any such device to take on that role. For reasons that will become apparent, the device acting as HBSC will generally be the one that is connected to the PSTN (see step 426).

Additional elements of the access point device according to the invention are an interface 34 for connection to other similar access point devices. Such connection may be through a wired connection (for example using telephone extension wiring, or by modulation over the power supply cables in the building). Alternatively, the interface 34 may communicate with other access points wirelessly, by a connection 345 to the RF interface. Other functions include a search function 35 for identifying neighbouring access points, a data store 36, and a handover control system 37 for controlling handover between the access point 30 and its neighbours.

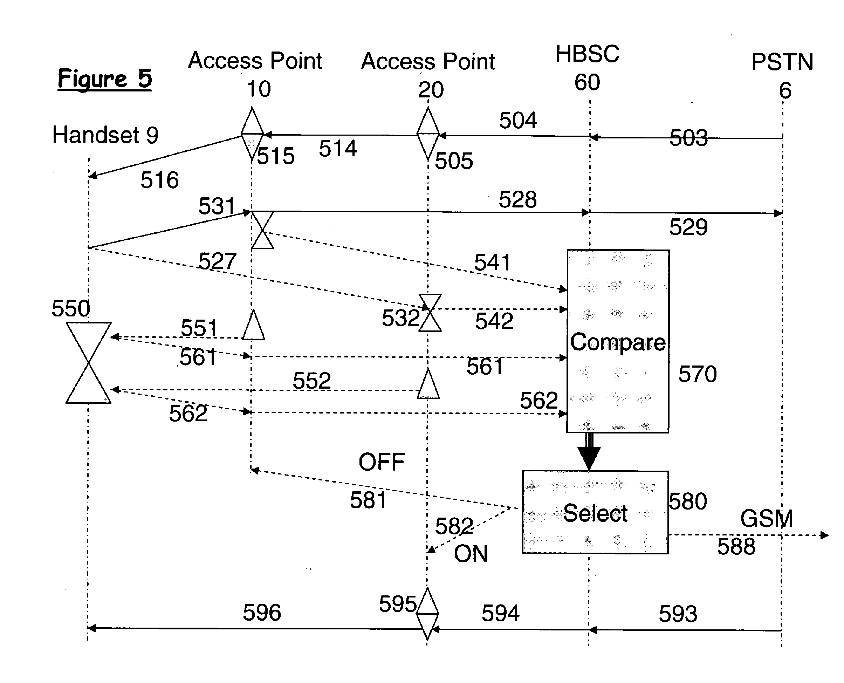

The operation of the invention will now be described. Firstly, the installation of the access points will be described with reference to Figure 4. Next, the operation of the access points to handle communications to and from a handset will be described with reference to Figure 5. Finally, the handling of handovers between access points, or between an access point and the cellular network 9, will be described, also with reference to Figure 5

The installation process is depicted in Figure 4. When a new access point is introduced to the local network, it scans to identify any other infrastructure access points that may be within range (step 400), and generate on a user display an indication of any such access points that may have been detected (step 401). The user then moves the device around the area to be covered (step 402) until an indication is given that the nearest (or only) neighbouring access point is at an optimal range to the new access point. The optimal range is the generally the maximum at which reliable intercommunication is possible, thus minimising overlap between coverage areas. This point can be identified by an indicator which illuminates when in range of another access point, which will be extinguished when moving out of range, and illuminate again when moving back into range.

The optimal range is the maximum at which reliable intercommunication is possible, but a closer range may be necessary for practical reasons, in particular to provide adequate coverage for handsets over the area to be served. For example, as shown in Figure 2, the distance between the access points 10, 20 is less than that between the access points 30, 40, 50, but the positioning of the access point 10 may be constrained by practical considerations such as the need to cover a region 19 near the overlap with the coverage of access point 20 (Figure 2), or the inability to mount an access point or provide a power supply at the otherwise optimum location 100.

The new access point is therefore now positioned to cover an area where there is no significant existing coverage. In many cases the new access point will be at the end of a "daisy-chain" of such access points, each communicating only with the previous one and next one (if any) to have been installed (see access points 10, 20, 30 in Figure 2). However, after the initial range-setting process has been set, the access point will be detected and communicate with all other access points within range. For example, two access points 40, 50 may be installed both identifying the same original access point 30 as the closest, forming a branched network. In this case the second access point 40 fitted may also be within range of the third access point 50 and may be second in its range table, but well within the edge-of-range condition. Therefore, both the neighbouring access points 30 and 40 could be detected by the access point 50 as within range and are useable to pass data to. Consequently, although each access point's location is determined by being in optimum range of a single neighbour, branched networks are possible, and even meshed networks using links which are suboptimal but still usable.

The user, having selected a location for the access point device, now activates the remainder of the set up procedure (step 403). The access point device now searches for the closest existing access point (step 404) and, having identified one (step 415) requests control data from it (step 416). This request is received (step 417) either by the HBSC 30 or by a previously-installed neighbour which already has that data, which transmits the requested data (418) to the access point to allow it to be configured to co-operate with the other members of the network (step 419) so that it and the existing access point devices can co-operate to all appear as one access point to a user device.

In the event that no nearby access point can be identified, the access point activates its own HBSC function 60 (step 425), setting up the codes and other provisions necessary for handsets to communicate with it (step 426). As this is, for the time being at least, the only access point in the network, the connection 31 to the PSTN is preferably made through this access point. Although it is possible to set up a network of two or more access points and then connect to the PSTN through whichever access point is most convenient, this is not an optimum configuration as it would result in more traffic over the network, as all traffic would have to be carried between the PSTN-connected access point and the access point acting as HBSC.

Having set up itself as HBSC (425, 426), or established a connection with an existing HBSC through a chain of one or more other access points (steps 416, 419), the access point device then awaits attempts to contact it by further access point devices. If the device detects (step 437) an attempt 436 to establish such a link by another access point (step 436), the control data previously stored is transmitted to it (step 438) so that the new access point may, in its turn, configure itself (step 439) to join the local wireless network.

The network of access points can now inter-communicate using virtual circuits transported by the radio link, as illustrated in Figure 5. The virtual circuit is prioritised for fast data transport between access ports, but only carries relatively small amounts of data, on an on-demand basis. This does not significantly affect the ability for each access point to connect wirelessly to client devices, as well as maintaining a second virtual circuit back to the HBSC, either with or connected to a broadband router/modem capability. Therefore we have radio connectivity between the access points that meet three separate needs, these being control traffic between each access point within the mesh, data traffic between each access point and the broadband gateway, and user traffic between individual client devices and their local access point.

Once at least one access point has been set up, handsets can communicate with the HBSC, gaining access through the nearest access point. The access point 10 that receives a registration request fro a handset 9 passes this information to the HBSC 60, which checks whether the handset is already registered and, if not already registered, checks whether its access code is one authorised for use on the network controlled by the HBSC. If it is so authorised, it passes the access code to all access points 10, 20, 30, 40, 50 in the set so that they will all recognise the handset 9.

Figure 5 shows the information flows between the PSTN 6, HBSC 60, two access points 10, 20, and the handset 9 during the course of a communications session, including, at steps 561/562, handover of the handset 9 between the access points 10, 20. As will be understood from Figure 2, the HBSC may serve more than two access points and/or more than one handset.

Under the control of the HBSC 60, all the access points 10, 20, broadcast a common service set identifier SSID and operate on the channel selected by the HBSC 60, and consequently a communications session can continue seamlessly, regardless of which access point is currently in use. The HBSC 60, on receiving a data transmission 503, 573 addressed to a specified handset 9, forwards it to any access points 20, 40 directly connected to it (504, 574).

As shown in Figure 5, each access point 20 may also act as a relay between the HBSC 60 and one or more further access points 10. In this case the access point 20 performs a comparison 505, 575 between the addressing of the data and the addresses of handsets it is currently serving, and transmits the data (576) for the handset 9 only if there is a match (575). If there is no match (505), the access point 20 relays the data 514 towards the other access points 10, which similarly perform the matching process 515, and accordingly determine whether to forward or transmit the data (516). Note that in Figure 5 the transmissions 516, 576 are forwarded to the handset by different access points 10, 20 - this is because a handover process 561, 562 has taken place in between these two transmissions 516, 576, so the outcomes of the comparisons 505, 575 are different. However, in both cases only one of the access points 10, 20 transmits the data 506, 576, thereby avoiding any interference effects at the handset 9.

In a variant, the HBSC 60 maintains a record of the network topology, and uses this to allow the data to be routed only to the access point 10, 20 currently serving the handset 9, by way of any other access points necessary to reach it.

Any access point 10, 20 within range of the handset 9 will detect transmissions 527 generated by the handset. The access point 10 currently selected to serve the handset 9 transmits any data received from the handset 9 to the HBSC 60 (528) and thus to the PSTN 6 (529). If any other access point 20 detects these transmissions it will not forward them to HBSC 60 as it is not the currently serving access point for that handset.

However, all the access points 10, 20, 30, ....... perform a monitoring process 531, 532 on the transmissions of any handset 9 within range for signal strength and quality, reporting their measurements 541, 542 to the HBSC 60. These measurements are used in the handover process, which will now be described.

Periodically each access point 10, 20 transmits its MAC Identity/address 551, 552. The handset 9 detects any of these transmissions that are in range, and responds to these transmissions with a handshake process 550 in which it measures the signal strength and transmits a report 561, 562. These reports 561, 562 are received by the access point 10 currently serving the handset 9 (not necessarily the access point 20 which initiated the handshake process) and forwarded to the HBSC. Over a period of time the HBSC 60 therefore receives handshake data 561, 562 generated by the handset 9 for each of the access points 10, 20 within range of the handset 9. As already discussed, each access point 10, 20 also sends reports 541, 542 on signal strength they themselves detect on their respective uplinks from the handset.

The HBSC compares these measurements (570) and, if the signal strength or other properties in respect of the currently serving access point 10 become inferior to those for another access point 20 then, after a short confirmation delay to ensure the change is not transient, the HBSC 60 selects the now-superior access point 20 for further transmission (step 580) and transmits control signals 581, 582 to both access points 10, 20 to re-set their forwarding controls.

Consequently, in the example illustrated in Figure 5, when further data 593 is transmitted from the PSTN 6 to the HBSC 60, and forwarded to the access point 20, the comparison 595 performed by the access point 20 identifies that the handset 9 is now working with that access point 20, so the access point should now transmit data to the handset 9 (596) and not forward it to another access point 10 (514)

Should the HBSC determine (580) that signal quality from all access points has fallen below a predetermined minimum, handover to the cellular network 8 is initiated (588). This minimum may be somewhat lower than the available quality on the cellular network 8, as the user may, for reasons of cost, bandwidth or available services, prefer to use the wifi system whenever possible. The access points continue to monitor for handsets not currently connected to them, whether switched off or connected to the cellular network, so that when they come back into range a handover from the cellular system back to wifi can be set up.

## Claims

1. A wireless access point having means to co-operate with similar access points to transmit and receive transmissions on a common channel, such that continuous communication with a mobile handset or test device is possible within the combined coverage of the set of access points..

2. A wireless access point according to claim 1, provided with means for receiving control instructions from a control system to cause it to operate on a channel selected by the controller and broadcast a service set identifier.

3. A wireless access point according to claim 1 or claim 2, provided with means to respond to commands from a control system so as to forward data received from a handset and transmit it to the controller only when instructed to do so by the controller.

4. A wireless access point according to claim 1, claim 2 or claim 3, provided with means to set up a network interconnecting the access point with further access points automatically as a user deploys them.

5. A wireless access point according to claim 4, wherein the access point has the ability to establish connection with one or more adjacent access points, such that the optimum positioning of each access point can be achieved.

6. A wireless access point according to claim 1, claim 2, claim 3, claim 4 or claim 5, comprising means for performing a handshake operation with any handset within range, measurement means for determining the quality of the signal received from the handset, and means for co-operating with other access points to control a handover process.

7. A network comprising a plurality of wireless access points each according to claim 1, claim 2, claim 3, claim 4, claim 5 or claim 6, which co-operate to transmit and receive transmissions on a common channel, such that continuous communication with a mobile handset is possible over the common channel within the combined coverage of the set of access points.

8. A network of wireless access points according to claim 7, wherein the access points are interconnected by a secondary radio virtual circuit.

9. A network of wireless access points according to claim 7, wherein the access points are interconnected by wired connections.

10. A network of wireless access points according to claim 7, claim 8 or claim 9, provided with provision for handover to and from an external network as a handset moves in and out of range of the combined coverage area of the plurality of access points.

11. A method of communicating between a plurality of wireless access points and one or more handsets, in which the handset communicates with a network through one of the access points, wherein the access points all transmit and receive on a common channel, wherein the access points determine between themselves which of them is to transmit data to the handset and to forward to the network data received from the handset.

12. A method according to claim 11, wherein the wireless access points each receive control instructions to operate on a predetermined common channel and broadcast a common service set identifier.

13. A method according to claim 11 or 12, wherein the access points are arranged such that at any time only one of the access points corresponds with a handset.

14. A method according to claim 11, 12 or 13, wherein the network of interconnecting access points is set up automatically as the user deploys them.

15. A method according to claim 14, wherein each access point establishes connection with one or more adjacent access points such that the optimum positioning of each access point can be achieved.

16. A method according to claim 11, claim 12, claim 13, claim 14, or claim 15, wherein each access points performs a handshake operation with any handset within range, determines the quality of the signal received from the handset, and the access points exchange signal quality data with each other to control a handover process.

17. A method according to claim 11, claim 12, claim 13, claim 14, claim 15 or claim 16, wherein a handset is handed over to and from an external network as it moves in and out of range of the combined coverage area of the plurality of access points.
